# EUROPEAN PATENT SPECIFICATION

(11) **EP 2 037 521 B1**
(45) Date of publication and mention of the grant of the patent: **15.06.2011**
(21) Application number: 07767446.3
(22) Date of filing: 18.06.2007
(51) Int. Cl.: H01M 8/02, C08J 5/18, H01B 13/00, H01M 8/10, H01M 8/00

(54) **METHOD OF MANUFACTURING A REINFORCED ELECTROLYTE MEMBRANE**
VERFAHREN ZUM HERSTELLEN EINER VERSTÄRKTEN ELEKTROLYTMEMBRAN UND MEMBRANELEKTRODEN-VERBINDUNGSKÖRPER
PROCÉDÉS DE PRODUCTION DE MEMBRANE ÉLECTROLYTIQUE RENFORCÉE ET CORPS DE JOINT MEMBRANE ÉLECTRODE

(30) Priority: 21.06.2006 JP 2006171852
(43) Date of publication of application: 18.03.2009
(73) Proprietor: Toyota Jidosha Kabushiki Kaisha, Toyota-shi Aichi 471-8571 (JP)
(72) Inventor: SUZUKI, Hiroshi, Toyota-shi Aichi 471-8571 (JP)
(74) Representative: Kuhnen & Wacker
(86) International application number: PCT/JP2007/062637
(87) International publication number: WO 2007/148805

(56) References cited:
- WO-A1-02/05372
- WO-A1-2004/088678
- WO-A1-2006/043706
- JP-A- 02 061 912
- JP-A- 56 118 276
- JP-A- 61 216 266
- JP-A- 2005 082 728
- JP-A- 2005 162 784
- US-A1- 2003 054 225

## Description

### Technical Field

The present invention relates to a method of manufacturing a reinforced electrolyte membrane and a membrane electrode assembly including the reinforced electrolyte membrane, which are used in a fuel cell.

### Background Art

There is known a solid polymer fuel cell as one form of a fuel cell. A solid polymer fuel cell is expected as a power source of an automobile, and the like, because it can be operated at a lower temperature (about 80°C to about 100°C) as compared with the other type of fuel cells and because it can also be reduced in cost and size.

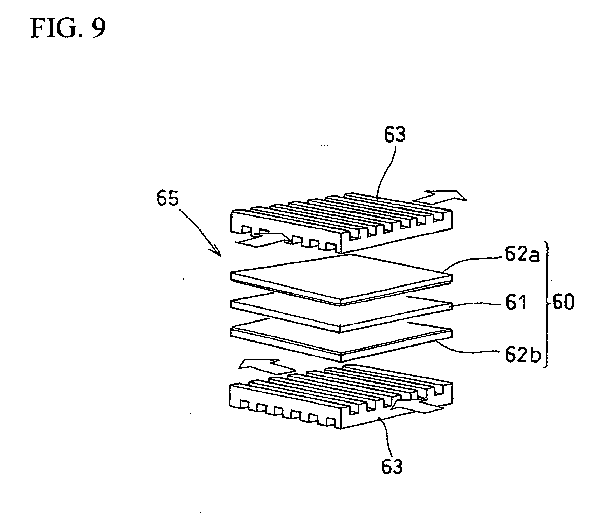

As shown in Figure 9, in the solid polymer fuel cell which includes a membrane electrode assembly (MEA) 60 as a main component, a single fuel cell 65 referred to as a unit cell is formed by holding the membrane electrode assembly 60 between separators 63 and 63 having a fuel (hydrogen) gas passage and an air gas flow channel. The membrane electrode assembly 60 has a structure in which an anode side electrode catalyst layer 62a is laminated on one side of an electrolyte membrane 61 that is an ion exchange membrane, and in which a cathode side electrode catalyst layer 62b is laminated on the other side of the electrolyte membrane 61.

As the electrolyte membrane 61, there is mainly used a thin film of perfluorosulfonic acid polymer (Nation membrane made by Du Pont Co. Ltd., U.S.A.) which is an electrolyte resin (ion exchange resin). Further, since it is not possible to obtain sufficient strength by the thin film of the electrolyte resin alone, there is described, in Patent Document 1, a method of manufacturing a reinforced electrolyte membrane, in which a polymer (electrolyte resin) dissolved in a solvent is impregnated into a porous reinforced film (for example, a thin film formed by extending PTFE, polyolefin resin, and the like), and in which after drying treatment, an ion exchange group is introduced into the electrolyte polymer.

In Patent Document 2, there is described a method of manufacturing a reinforced electrolyte membrane, in which a reinforced electrolyte membrane is manufactured in such a manner that a process of pressure-impregnating a heated and molten electrolyte resin (polymer) from a screw extruder into a continuously supplied porous reinforced membrane via a resin mold is performed to both the surfaces of the porous reinforced membrane, and that an ion exchange group is then introduced into the electrolyte polymer.

An electrode catalyst material made of an electrode catalyst, such as platinum-carrying carbon, and of an electrolyte resin is mainly used for the electrode catalyst layers 62a and 62b. The membrane electrode assembly 60 is manufactured in such a manner that the electrode catalyst material is applied, by using a screen printing method or the like, to the electrolyte membrane 61 or the reinforced electrolyte membrane described in Patent Document 1 and Patent Document 2 and dried (see Patent Document 3, and the like).
Patent Document 1: JP Patent Publication (Kokai) No. 9-194609 A (1997)
Patent Document 2: JP Patent Publication (Kokai) No. 2005-162784 A
Patent Document 3: JP Patent Publication (Kokai) No. 9-180728 A (1997)

### Disclosure of the Invention

### Problems to be Solved by the Invention

In the method of manufacturing a reinforced electrolyte membrane described in Patent Document 2, not an electrolyte resin dissolved in the solvent but a heated and molten electrolyte resin is directly impregnated in a porous reinforced membrane, so that it is possible to obtain a reinforced electrolyte membrane which is excellent in durability and chemically stable. However, the apparatus used in the manufacturing method is somewhat complicated in that apparatuses for pressure-impregnating a molten electrolyte resin into a continuously supplied porous reinforced membrane are arranged on both sides of the porous reinforced membrane.

The present invention has been made in view of the above described circumstance. An object of the present invention is to provide a new manufacturing method by which a reinforced electrolyte membrane obtained by directly impregnating a molten electrolyte resin into a porous reinforced membrane can be manufactured in a simpler manner. A further object of the present invention is to provide a new method of manufacturing a membrane electrode assembly using the method of manufacturing a reinforced electrolyte membrane.

### Means for Solving the Problems

A method of manufacturing a reinforced type electrolyte membrane, according to the present invention, is a method of manufacturing a reinforced electrolyte membrane in which a porous reinforced membrane is embedded in an electrolyte resin, and includes at least: a process of extruding a heated and molten electrolyte resin from a resin discharge port of a die; a process of supplying a porous reinforced membrane into the extruded molten electrolyte resin; and a process of embedding the porous reinforced membrane supplied by two heated rotating rolls arranged opposite to each other into the molten electrolyte resin, and of impregnating the molten electrolyte resin into the porous reinforced membrane.

In the above described method, the electrolyte resin heated and molten by a conventionally known kneading extruder is fed to the die, so that the heated and molten electrolyte resin is continuously extruded at a fixed pressure and in a thin film form from the resin discharge port of the die. The porous reinforced membrane is supplied into the extruded molten electrolyte resin by a suitable method. In the preferred embodiment, two sheets of porous reinforced membranes are supplied along both sides of the extruded molten electrolyte resin. The supplied porous reinforced membrane is pressed into the molten electrolyte resin by the two heated rotating rolls arranged opposite to each other. Since the rotating rolls are heated, the molten state of the electrolyte resin is maintained. Thereby, the porous reinforced membrane is embedded in the molten electrolyte resin by the pressing-in of the porous reinforced membrane. At the same time, the molten electrolyte resin is impregnated into the porous reinforced membrane, and a part of the molten electrolyte resin is made to ooze out to the surface side. In the state, the molten electrolyte resin and the porous reinforced membrane are delivered integrally with each other to the downstream side by the extruding force of the resin and the rotating force of the heated rotating rolls, so as to become a reinforced electrolyte membrane.

By suitably controlling the amount of the molten electrolyte resin extruded from the resin discharge port of the die and the distance between the two heated rotating rolls arranged opposite to each other, it is possible to desirably set the entire film thickness of the reinforced electrolyte membrane, the thickness of the electrolyte layer formed on the outside of the porous reinforced membrane, and possible to desirably set the distance between two sheets of porous reinforced membranes in the case where the two sheets of porous reinforced membranes are supplied. Further, it is also possible to prevent air from entering the inside of the formed reinforced electrolyte membrane.

As the electrolyte resin used in the present invention, it is preferred to use a fluorine electrolyte resin causing no heat deterioration thereof. In this case, a treatment of imparting ion exchanging properties to an electrolyte polymer by a hydrolysis treatment, or the like, is further applied to the manufactured reinforced electrolyte membrane. Further, in this case, it is preferred to perform the above described treatment by heating the rotating rolls at a temperature of 200 to 300°C. As the porous reinforced membrane, a conventionally used porous reinforced membrane can be used as it is, and there are listed, for example, porous reinforced membranes made by uniaxially or biaxially stretching PTFE (polytetrafluoroethylene) and polyolefin resin, and the like. The thickness of the porous reinforced membrane is preferably set to about 5 to 50 µm.

The present application also discloses a new manufacturing method for manufacturing a membrane electrode assembly including the reinforced electrolyte membrane, on the basis of the above described method of manufacturing a reinforced electrolyte membrane. That is, according to the present invention, there is provided a method of manufacturing a membrane electrode assembly having electrode catalyst layers on both sides of a reinforced electrolyte membrane in which a porous reinforced membrane is embedded into an electrolyte resin, the manufacturing method including at least: a process of extruding a heated and molten electrolyte resin from a resin discharge port of a die; a process of supplying a porous reinforced membrane into the extruded molten electrolyte resin; a process of applying electrode catalyst particles or a mixture of electrode catalyst particles and electrolyte resin particles to two heated rotating rolls arranged opposite to each other; and a process of impregnating the molten electrolyte resin into the porous reinforced membrane by embedding the supplied porous reinforced membrane into the molten electrolyte resin by the heated rotating rolls to which the mixture is applied, and of at the same time forming an electrode catalyst layer on the surface of the porous reinforced membrane.

The method of manufacturing the above described membrane electrode assembly is characterized in that in the above described method of manufacturing a reinforced electrolyte membrane, there is further added a process of applying the electrode catalyst particles or the mixture of electrode catalyst particles and electrolyte resin particles to the two heated rotating rolls which are arranged opposite to each other so as to sandwich the supplied porous reinforced membrane. In the present embodiment, when the supplied porous reinforced membrane is pressed into the molten electrolyte resin by the pair of heated rotating rolls, since the electrode catalyst particles or the mixture of electrode catalyst particles and electrolyte resin particles are or is applied to the surface of the rotating rolls, the electrode catalyst particles are made to adhere to the surface of the reinforced electrolyte membrane simultaneously with the pressing-in of the porous reinforced membrane, so that the electrode catalyst layer is formed. Then, the membrane electrode assembly including the formed reinforced electrolyte membrane is delivered to the downstream side by the extruding force of the resin and the rotating force of the heated rotating rolls.

In the membrane electrode assembly manufactured in this way, the electrode catalyst particles are arranged on the surface of the molten electrolyte resin. Thereby, the formation of a boundary surface between the electrode catalyst layer and the electrolyte membrane is prevented, so that the electrode catalyst layer and the electrolyte membrane are more firmly integrated. In particular, when a mixture of electrode catalyst particles and electrolyte resin particles (preferably having a particle size of several micrometers or less) is applied to the heated rotating rolls, the electrolyte resin particles are molten on the heated rotating rolls, so as to function as a binder to the electrode catalyst particles. Thereby, the bonding property on the surface of the porous reinforced membrane is further improved and the process speed is also increased.

Also in this case, as the electrolyte resin, it is preferred to use a fluorine electrolyte resin causing no heat deterioration thereof. When the fluorine electrolyte resin is used, there is further performed a treatment of imparting ion exchanging properties to an electrolyte polymer by a hydrolysis treatment, or the like to the manufactured membrane electrode assembly.

According to the present invention, a reinforced electrolyte membrane obtained by directly impregnating a molten electrolyte resin into a porous reinforced membrane can be manufactured by a simple method. Further, a membrane electrode assembly including the reinforced electrolyte membrane can be easily manufactured by slightly changing the method of manufacturing a reinforced electrolyte membrane.

### Brief Description of the Drawings

Figure 1 is a schematic illustration for explaining a first embodiment of a method of manufacturing a reinforced electrolyte membrane according to the present invention.
Figure 2 is a schematic illustration for explaining a method of manufacturing a membrane electrode assembly, in which the first embodiment is changed.
Figure 3 is a graph showing a relationship between the required amount of electrolyte resin and the film thickness of reinforced electrolyte membrane in the method of manufacturing the membrane electrode assembly shown in Figure 2.
Figure 4 is a schematic illustration for explaining a second embodiment of a method of manufacturing a reinforced electrolyte membrane according to the present invention.
Figure 5 is a schematic illustration for explaining in detail a die used in the second embodiment.
Figure 6 is a schematic illustration for explaining another form of the die used in the second embodiment.
Figure 7 is a schematic illustration for explaining another form of the die used in the second embodiment.
Figure 8 is a schematic illustration for explaining another form of the die used in the second embodiment.
Figure 9 is a schematic illustration for explaining an example of a solid polymer fuel cell.

### Description of Symbols

1 ... Kneading extruder of electrolyte resin, 2 ... Die, 3 ... Resin discharge port, 4a, 4b ... Heated rotating roll, 5a, 5b ... Porous reinforced membrane supply roll, 6, 6a, 6b ... Porous reinforced membrane, 20 ... Reinforced electrolyte membrane, 40 ... Membrane electrode assembly, 30 ... Nozzle, 31 ... Electrode catalyst particle, 32 ... Fluorine electrolyte fine particle, 41 ... Electrode catalyst layer, 50 ... Die, 51 ... Film passage, 52a, 52b ... Resin discharge port, 53a, 53b ... Resin supply passage, 51a ... Film passage inlet port, 51b ... Film passage outlet port, 54 ... Vacuum pump, 55 ... Degassing chamber, 56 ... Relief passage, p ... Molten electrolyte resin, S ... Interval between rotating rolls, Sa ... Distance between axes of two heating rollers

### Best Mode for Carrying Out the Invention

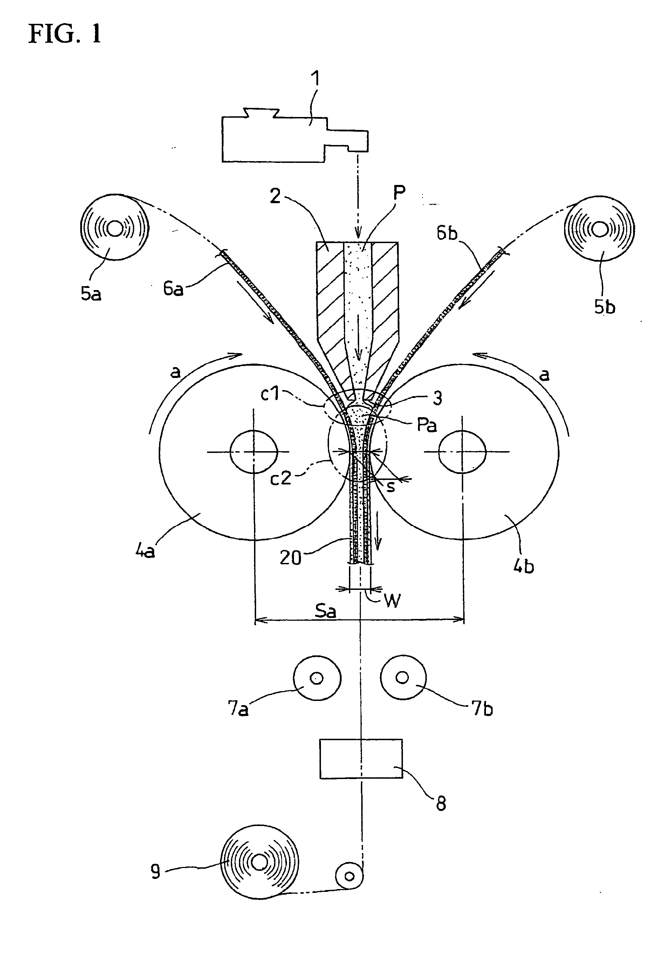

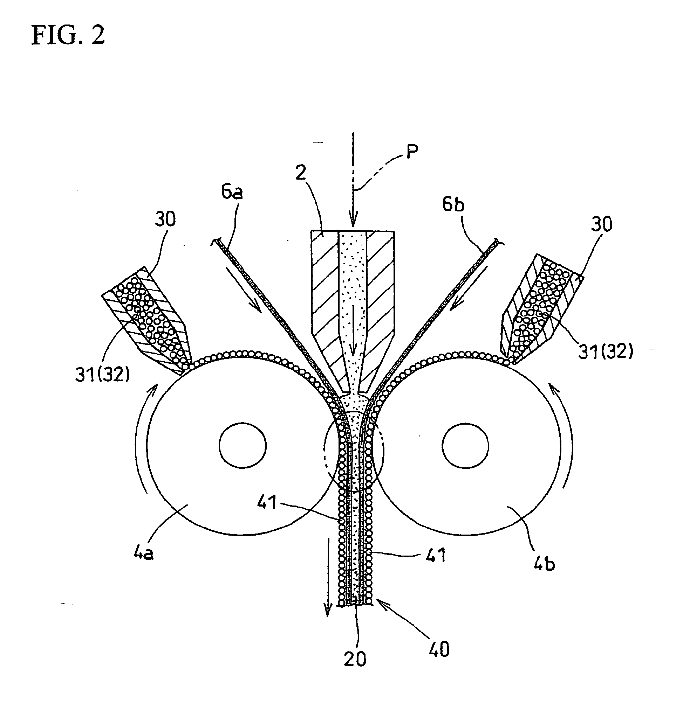

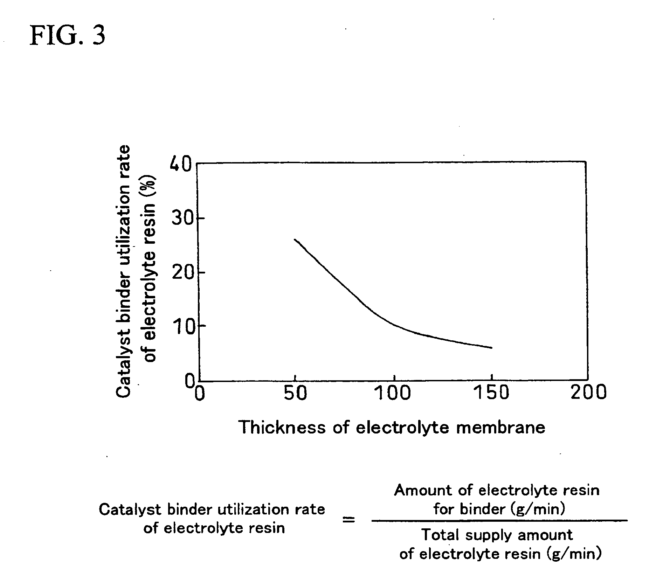

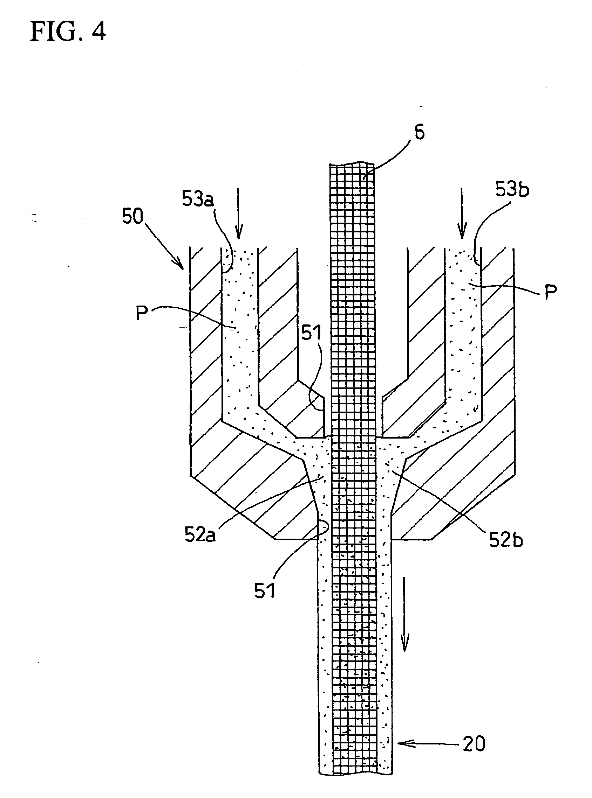

In the following, embodiments according to the present invention will be described with reference to the accompanying drawings. Figure 1 is a schematic illustration for explaining a first embodiment of a method of manufacturing a reinforced electrolyte membrane according to the present invention. Figure 2 is a schematic illustration for explaining a method of manufacturing a membrane electrode assembly, in which the first embodiment is changed. Figure 3 is a graph showing a relationship between the required amount of electrolyte resin and the film thickness of reinforced electrolyte membrane in the method of manufacturing the membrane electrode assembly shown in Figure 2. Figure 4 to Figure 8 are schematic illustrations explaining a second embodiment of a method of manufacturing a reinforced electrolyte membrane according to the present invention.

First, there will be described a method of manufacturing a reinforced electrolyte membrane according to a first embodiment. In the schematic illustration shown in Figure 1, reference numeral 1 denotes an electrolyte resin kneading extruder, in which for example, supplied fluorine electrolyte particles are heated and kneaded to become a heated and molten electrolyte resin p. The molten electrolyte resin p is pressure-fed to a die 2 and is extruded from a resin discharge port 3 of the die 2. The resin discharge port 3 has a rectangular shape, and the molten electrolyte resin p is extruded in a thin film form from the resin discharge port 3.

Just below the resin discharge port 3 of the die 2, paired rotating rolls 4a and 4b are arranged opposite to each other at an interval S so as to sandwich the extruded molten electrolyte resin p from both sides of thereof. The respective rotating rolls 4a and 4b are rotated in the arrow direction a, and are heated at a temperature of about 200 to 300°C by a heating unit (not shown) such as a heat ray heater. Preferably, the distance Sa between the axes of the two rotating rolls 4a and 4b is made variable. In this case, the interval S between the rolls can be changed by changing the distance Sa between the axes of the rolls. In the embodiment shown in the Figure 1, the interval S between the two rotating rolls 4a and 4b is set narrower than a film thickness W of a reinforced electrolyte membrane 20 to be obtained.

In the present embodiment, two porous reinforced membrane supply rolls 5a and 5b are positioned so as to sandwich the die 2, and two sheets of porous reinforced membranes 6a and 6b are supplied from the porous reinforced membrane supply rolls 5a and 5b so as to pass through the gap between the tip of the die 2 and the two rotating rolls 4a and 4b. The porous reinforced membranes 6a and 6b are obtained by monoaxially or biaxially stretching PTFE, polyolefin resin, and the like. A porous reinforced membrane, which is used in a conventionally known reinforced electrolyte membrane, can be used as it is as the porous reinforced membranes 6a and 6b. The thickness of the porous reinforced membranes 6a and 6b is preferably set to about 5 to 50 µm. Note that it may also be configured such that a single sheet of the porous reinforced membrane is supplied or three sheets of the porous reinforced membranes are supplied.

In the manufacture of the electrolyte membrane, the porous reinforced membranes 6a and 6b are pulled out from the porous reinforced membrane supply rolls 5a and 5b, and are made to pass through the gap S between the two rotating rolls 4a and 4b. The rotating rolls 4a and 4b are heated at a temperature of 200 to 300°C. The kneading extruder 1 is operated so that the heated and molten electrolyte resin p is fed into the die 2 at a predetermined pressure. The fed molten electrolyte resin p is extruded at a fixed amount and at a fixed pressure from the resin discharge port 3 of the die 2, and enters between the two sheets of the porous reinforced membranes 6a and 6b as shown by an imaginary circle c1 in Figure 1. That is, the two sheets of porous reinforced membranes 6a and 6b are supplied so as to sandwich the extruded molten electrolyte resin p.

The two rotating rolls 4a and 4b are rotated in the arrow direction a. By the rotation of the two rotating rolls 4a and 4b, the two sheets of porous reinforced membranes 6a and 6b are sent to the downstream side at a speed corresponding to the rotating speed of the rotating rolls 4a and 4b. When passing through the gap S between the rotating rolls 4a and 4b, the two sheets of porous reinforced membranes 6a and 6b are pressed into the molten electrolyte resin p by the two heated rotating rolls 4a and 4b arranged opposite to each other, so that the respective porous reinforced membranes 6a and 6b are embedded in the molten electrolyte resin. In the process, the degassing from the pores of the porous reinforced membranes 6a and 6b, and the impregnation of the molten electrolyte resin p into the pores of the porous reinforced membranes 6a and 6b are made to progress. Further, a part of the molten electrolyte resin p is made to ooze out to the outside of the porous reinforced membranes 6a and 6b, as shown in an imaginary circle c2 in Figure 1. Thereby, the reinforced electrolyte membrane 20, in which the two sheets of porous reinforced membranes 6a and 6b are embedded into the molten electrolyte resin p, is formed.

The formed reinforced electrolyte membrane 20 is cooled by passing between cooling rolls 7a and 7b positioned on the downstream side. When passing a hydrolysis apparatus 8, the formed reinforced electrolyte membrane 20 is subjected to a treatment of imparting ion exchanging properties to an electrolyte polymer, and is then wound around a winding roll 9.

In the above described process, as shown in the imaginary circle c1 in Figure 1, it is preferred to effect, by adjusting the discharge amount from the resin discharge port 3 of the die 2, a state where a certain amount of molten electrolyte resin pa is always retained between the porous reinforced membranes 6a and 6b on the upstream side from the position at which the porous reinforced membranes 6a and 6b are sandwiched between the rotating rolls 4a and 4b. Thereby, it is possible to suppress air from entering at the time of the resin impregnation. Note that the discharge amount from the resin discharge port 3 can be adjusted by adjusting the pressure for feeding the molten electrolyte resin to the die 2, or by using a unit for adjusting the opening area of the resin discharge port 3.

In the above described manufacturing method, the porous reinforced membranes 6a and 6b are mainly sent by a direct-frictional force with the rotating rolls 4a and 4b, or by an indirect frictional force with the rotating rolls 4a and 4b via the molten electrolyte resin oozing out from the porous reinforced membranes 6a and 6b. This also makes it possible to suppress the porous reinforced membranes 6a and 6b from being damaged. Further, it is possible to manufacture the reinforced electrolyte membrane 20 having an arbitrary film thickness by suitably adjusting the discharge amount from the resin discharge port 3, the rotating speed of the rotating rolls 4a and 4b, and/or the distance Sa between the axes of the two rotating rolls 4a and 4b, or the like.

In the following, there will be described a method of manufacturing a membrane electrode assembly by using the above described manufacturing method and apparatus, with reference to a schematic illustration shown in Figure 2. The manufacturing method fundamentally utilizes the apparatus shown in the schematic illustration in Figure 1. Thus, in Figure 2, components common to those in Figure 1 are denoted by the same reference numerals and characters, and the explanation thereof is omitted.

In the manufacture of a membrane electrode assembly 40, a process of applying electrode catalyst particles 31 or a mixture of electrode catalyst particles 31 and fluorine electrolyte fine particles 32 (preferably having a particle size of several micrometers or less) to the peripheral surface of the heated rotating rolls 4a and 4b from a nozzle 30 is added to the above described method of manufacturing the membrane electrode assembly 20. The electrode catalyst particles 31 or the mixture of the electrode catalyst particles 31 and the fluorine electrolyte particles 32, which are or is applied to the rotating rolls 4a and 4b, are or is made to adhere to the surface of the molten electrolyte resin p which is impregnated into the porous reinforced membranes 6a and 6b and further oozes out to the outside of the porous reinforced membranes 6a and 6b at the time when the porous reinforced membranes 6a and 6b are pressed into the molten electrolyte resin p by the rotating rolls 4a and 4b. Thereby, an electrode catalyst layer 41 is formed. In this case, the oozing molten electrolyte resin functions as a binder. This prevents a boundary surface from being formed between the electrode catalyst layer 41 and the electrolyte membrane 20, so that the membrane electrode assembly 40 is more firmly formed.

In the case where the mixture of electrode catalyst particles 31 and fluorine electrolyte fine particles 32 is applied, the electrolyte fine particles 32 are molten on the heated rotating rolls 4a and 4b. The molten electrolyte fine particles 32 also exhibit the binder effect. Thereby, the formation of the boundary surface between the electrode catalyst layer 41 and the electrolyte membrane 20 is further suppressed, so that the membrane electrode assembly 40 having a further improved bonding property is obtained. Further, the process speed is also increased.

Although not shown in Figure 2, similarly to the reinforced electrolyte membrane 20 shown in Figure 1, the manufactured membrane electrode assembly 40 is cooled by passing between the cooling rolls 7a and 7b positioned on the downstream side. Also, when passing the hydrolysis apparatus 8, the manufactured membrane electrode assembly 40 is subjected to a treatment of imparting ion exchanging properties to an electrolyte polymer in the electrolyte membrane.

Figure 3 shows a relationship between the required electrolyte amount and the electrolyte film thickness including the reinforcing membrane in the case where the method as described with reference to Figure 2 is used, and where a membrane electrode assembly 40, which has a width of 500 mm and which has on the one side thereof an electrode catalyst layer having a thickness of 15 5 µm, is manufactured at a rate of 1m/min by using porous reinforced membranes 6a and 6b having a porosity of 80% and a thickness of 30 µm/sheet. Note that in the manufacture of the membrane electrode assembly 40, the molten electrolyte resin p and the rotating rolls 4a and 4b are preferably maintained at the same temperature of 200°C or more to less than 300°C. For example, in the case of a temperature of 250°C, when the pressure applied to the rolls is set higher (in this case, to 10 N/cm² or more) than the viscosity (1000 to 3000 pa·s) of the electrolyte resin, the excessively supplied electrolyte (for example, as shown in Figure 3, 18 to 20% of the supplied amount at the time when the thickness of the electrolyte membrane including the reinforced membrane is 70 µm) is made to ooze out to the outside of the porous reinforced membranes 6a and 6b, and enters the gaps between the electrode catalyst particles 31 carried by the rotating rolls 4a and 4b. In this state, the electrolyte is fused with the electrode catalyst particles 31 to function as the binder, so that the electrode catalyst particles 31 can be fixed in a state with no boundary surface. Note that in Figure 3, there is shown a relationship that the catalyst binder utilization ratio (%) of electrolyte resin = the amount of electrolyte resin for binder (g/min)/the total amount of supplied electrolyte resin (g/min).

Next, there will be described a method of manufacturing a reinforced electrolyte membrane according to a second embodiment with reference to Figure 4 to Figure 8. In the first embodiment, the porous reinforced membranes 6a and 6b are arranged on both sides of the heated and molten electrolyte resin to form the reinforced electrolyte membrane 20. On the other hand, however, in the second embodiment, a reinforced electrolyte membrane is manufactured in such a manner that the heated and molten electrolyte resin p is supplied from both sides of the moving porous reinforced membrane 6 and is impregnated into the porous reinforced membrane 6.

In Figure 4, reference numeral 6 denotes a thin film porous reinforced membrane similar to the porous membrane used in the first embodiment, and the heated and molten electrolyte resin p is pressure-impregnated into the porous reinforced membrane 6, so that the reinforced electrolyte membrane 20 is formed. Reference numeral 50 denotes a die used in the impregnating process. The die 50 includes a film passage 51 through which the porous reinforced membrane 6 passes, and paired resin discharge ports 52a and 52b arranged on both sides of the porous reinforced membrane 6 passing through the film passage 51. Each of the resin discharge ports 52a and 52b communicates with each of resin supply passages 53a and 53b. Although not shown in Figure 4, the heated and molten electrolyte resin p, which is, for example, a fluorine electrolyte, is supplied to the resin supply passages 53a and 53b at a fixed amount and at a predetermined pressure from the same electrolyte resin kneading extruder 1 as shown in Figure 1.

The molten electrolyte resin p extruded at the fixed amount and at the predetermined pressure from the respective resin discharge ports 52a and 52b is impregnated into the porous reinforced membrane 6 from both sides thereof, and the reinforced electrolyte membrane 20 with the resin p impregnated therein is extruded from the die 50 by the extruding force caused by the viscoelasticity of the resin p. Note that although not shown, the cooling rolls 7a and 7b for cooling, the hydrolysis apparatus 8, and the winding roll 9 are arranged on the downstream side of the die 50 similarly to Figure 1, so that the formed reinforced electrolyte membrane 20 is cooled and subjected to the treatment of imparting ion exchanging properties to an electrolyte polymer. Then, the reinforced electrolyte membrane 20 is wound around the winding roll 9.

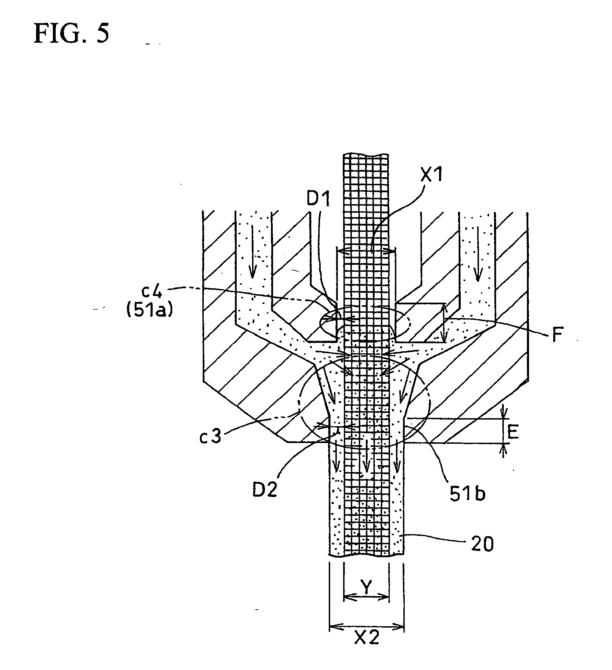

There will be described in detail a configuration of the die 50 with reference to Figure 5. In Figure 5, a region surrounded by an imaginary circle c 3 represents the resin discharge ports 52a and 52b, whose width, although not essential, is gradually made narrower from the upstream side to the downstream side. Thereby, the impregnation of the resin p into the porous reinforced membrane 6 is promoted, and the reinforced electrolyte membrane 20 with the resin p impregnated therein can be smoothly extruded from the die 50 by the extruding force caused by the viscoelasticity of the resin p.

Further, an opening width X1 of an inlet port 51a of the film passage 51 communicating with the resin discharge ports 52a and 52b, as shown by an imaginary circle c4 in Figure 5, and an opening width X2 of an outlet port 51b are both made larger than the thickness Y of the porous reinforced membrane 6, and are set as X1 < X2. Therefore, a clearance D1 of (X1-d)/2 is formed on both sides of the passing porous reinforced membrane 6 at the inlet port 51a, and a clearance D2 of (X2-d)/2 is formed on both sides of the porous reinforced membrane 6 at the outlet port 51b. As shown in the figure, the porous reinforced membrane 20 with the molten electrolyte resin p impregnated therein is sent out at the thickness corresponding to the opening width X2 of the outlet port 51b of the film passage 51.

Further, there is a relationship that the clearance D1< the clearance D2. Thus, by adjusting the width of the clearance D1, it is possible to prevent the molten electrolyte resin p from flowing backward and flowing out to the outside. Further, the resin can be prevented from flowing out to the inlet side of the porous reinforced membrane 6 also in such a manner that the shearing resistance of the resin at the inlet port 51a is increased by setting the orifice length F at the inlet port 51a longer than the orifice length E at the outlet port 51b.

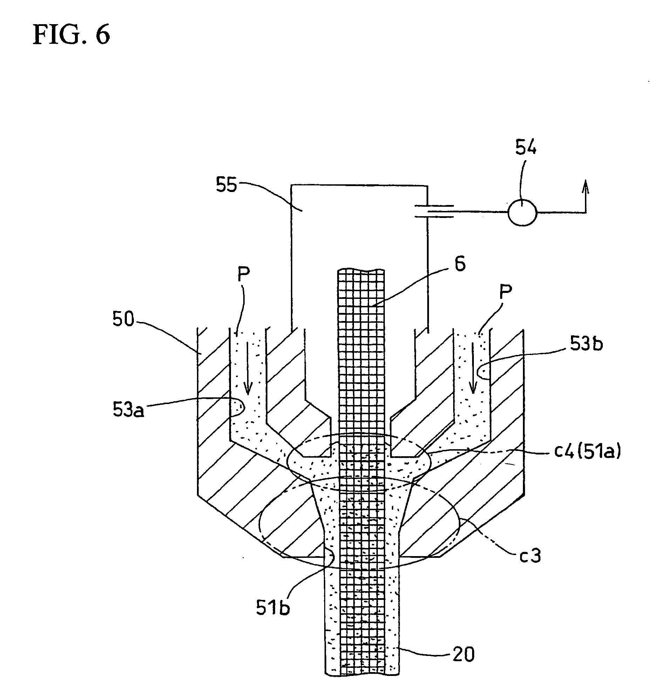

In the embodiment shown in Figure 6, a degassing chamber 55 communicating with a vacuum pump 54 is formed at the inlet port 51a of the film passage 51 of the die 50 shown in Figure 4 and Figure 5. In the embodiment, the porous reinforced membrane 6 is degassed while passing the degassing chamber 55, so that the porous reinforced membrane 6 in the degassed state is made to enter from the film passage inlet port 51a of the die 50. Thereby, the molten electrolyte resin p can be rapidly impregnated into the porous reinforced membrane 6, and it is also possible to suppress air from entering the membrane. Note that according to the viscosity of the molten electrolyte resin p, and the like, the clearance D1 of the inlet port 51a, the orifice length F of the inlet port 51a, the pressure reduction degree attained by evacuation by the vacuum pump 54, and the like, are suitably set so as to prevent the molten electrolyte resin p from flowing backward.

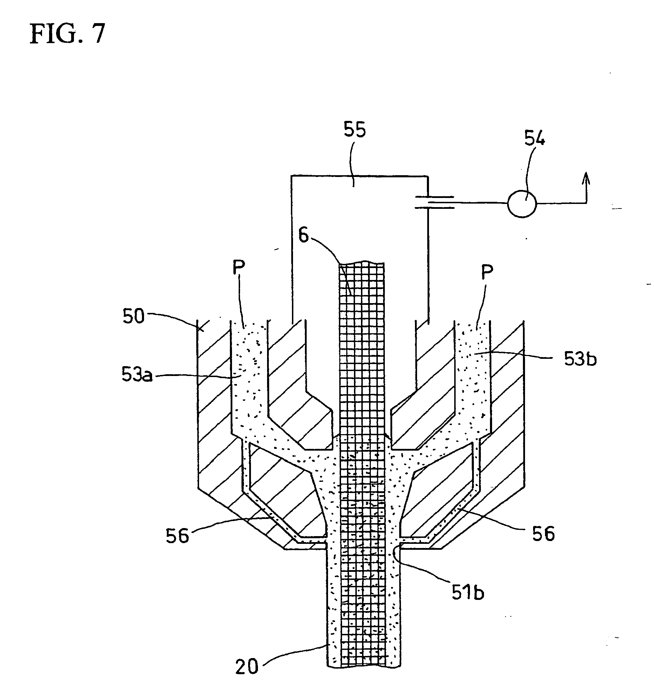

In the die 50 shown in Figure 7, the outlet port 51b of the film passage 51 is made to communicate with the resin supply passages 53a and 53b by a relief passage 56. When the relief passage 56 is formed in this way, it is possible to improve the fluidity of the molten electrolyte resin p in the region from the resin supply passages 53a and 53b to the outlet port 51b of the film passage 51, so that the extrusion property of the reinforced electrolyte membrane 20 in which the resin is impregnated is improved.

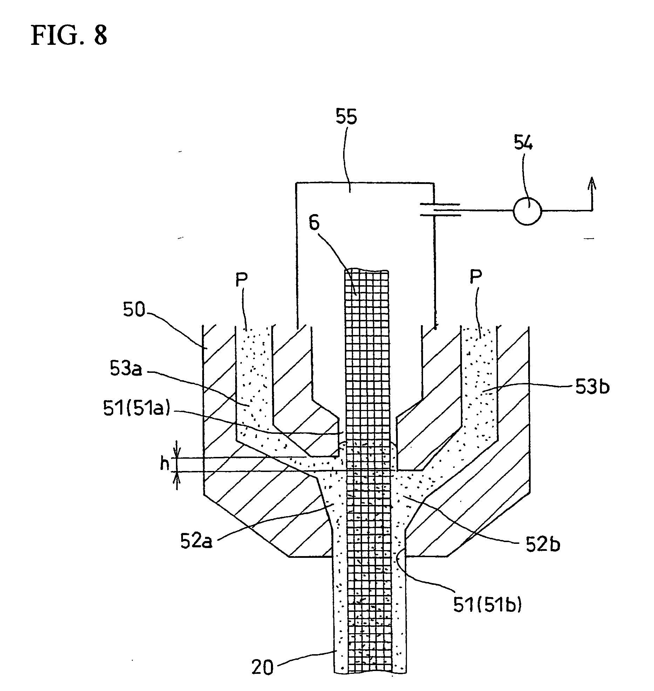

In the die 50 shown in Figure 8, in order to improve the impregnation of the molten electrolyte resin p into the porous reinforced membrane 6, the positions at which the molten electrolyte resin p is impregnated into the porous reinforced membrane 6 from the die 50 are offset in such a manner that the lengths of the resin discharge ports 52a and 52b are made different from each other in the moving direction of the porous reinforced membrane 6 and thereby a level difference of a distance h is formed on the lower end side of the inlet port 51a of the film passage 51. With this configuration, even in such a case where the supply of the molten electrolyte resin p from the two resin discharge ports 52a and 52b is not made constant, the molten electrolyte resin p supplied form one resin discharge port (resin discharge port 52a in the present embodiment) can be impregnated in a constant manner into the reinforced membrane 6. Thereby, it is possible to correct the instability in the impregnation state of the molten electrolyte resin p supplied from the other resin discharge port (resin discharge port 52b in the present embodiment), which instability is caused by a variation in the film thickness, and the like.

An example will be explained in the case where the reinforced electrolyte membrane 20 is formed at the rate of 1 m/min from the die 50 while the molten electrolyte resin p is impregnated into the porous reinforced membrane 6 by using the die 50 shown in Figure 6. The porous reinforced membrane 6 having a film thickness of 50 µm is used, and the film thickness of the reinforced electrolyte membrane 20 to be formed is set to 100 µm. In this case, the clearance D2 at the outlet port 51 b becomes about 25 µm. The clearance D1 at the inlet port 51a is set to about 15 µm, and further the relationship between the orifice length E at the outlet port 51b and the orifice length F at the inlet port 51a is set as F > 3E.

By using the electrolyte resin kneading extruder, the electrolyte resin is heated and molten at a temperature of 200°C or more to less than 300°C, and is supplied to the resin supply passages 53a and 53b. Preferably, the temperature of the molten electrolyte resin p is set to a temperature of 250 to 280°C in the vicinity of the die outlet port 51b, so as to stabilize the resin viscosity (about 1000 to 3000 pa·s). At the inlet port 51a, the temperature of the molten electrolyte resin p is set to a temperature of 200 to 230°C, so as to increase the resin viscosity (about 5000 to 10000 pa·s). The degree of vacuum in the degassing chamber 55 is set to about several kpa to 10 kpa.

Thereby, it is possible to prevent the molten electrolyte resin p from flowing backward from the inlet port 51a. As a result, there is obtained the reinforced electrolyte membrane 20 which has a film thickness of 100 µm and in which the molten electrolyte resin p is uniformly impregnated into the porous reinforced membrane 6.

## Claims

1. A method of manufacturing a reinforced electrolyte membrane in which a porous reinforced membrane (6) is embedded into an electrolyte resin, the method comprising at least:
a process of extruding the heated and molten electrolyte resin (p) from a resin discharge port (3) of a die (2);
a process of supplying the porous reinforced membrane (6) into the extruded molten electrolyte resin (p); and
a process of embedding the porous reinforced membrane (6) into the molten electrolyte resin (p), and impregnating the molten electrolyte resin (p) into the porous reinforced membrane (6),
the method being **characterized in that**
the porous reinforced membrane (6) is supplied into the extruded molten electrolyte resin (p) by two heated rotating rolls (4) arranged opposite to each other.

2. The method of manufacturing a reinforced electrolyte membrane according to claim 1, further comprising a process of applying a treatment of imparting ion exchanging properties to an electrolyte polymer, to the manufactured reinforced electrolyte membrane (6).

3. A method of manufacturing a membrane electrode assembly (30) including electrode catalyst layers (41) on both sides of a reinforced electrolyte membrane in which a porous reinforced membrane (6) is embedded into an electrolyte resin (p), the method comprising:
a process of extruding the heated and molten electrolyte resin (p) from a resin discharge port (3) of a die (2);
a process of supplying the porous reinforced membrane (6) into the extruded molten electrolyte resin (p);
the method being **characterized by** further comprising:
a process of applying electrode catalyst particles (31) or a mixture of electrode catalyst particles (31) and electrolyte resin particles (32) to two heated rotating rolls (4) arranged opposite to each other; and
a process of impregnating the molten electrolyte resin (p) into the porous reinforced membrane (6) by embedding the supplied porous reinforced membrane (6) into the molten electrolyte resin (p) by the heated rotating rolls (4) to which the mixture is applied, and of at the same time forming an electrode catalyst layer (41) on the surface of the porous reinforced membrane (6).

4. The method of manufacturing the membrane electrode assembly according to claim 3, further comprising a process of applying a treatment of imparting ion exchanging properties to an electrolyte polymer forming the electrolyte membrane (6), to the manufactured membrane electrode assembly (40).

## Patentansprüche

1. Verfahren zum Herstellen einer verstärkten Elektrolytmembran, in der eine poröse verstärkte Membran (6) in ein Elektrolytharz eingebettet ist, wobei das Verfahren zumindest folgende Schritte beinhaltet:
einen Vorgang des Extrudierens des erwärmten und geschmolzenen Elektrolytharzes (p) aus einem Harzabführkanal (3) eines Formwerkzeugs (2);
einen Vorgang des Zuführens der porösen verstärkten Membran (6) in das extrudierte geschmolzene Elektrolytharz (p); und
einen Vorgang des Einbettens der porösen verstärkten Membran (6) in das geschmolzene Elektrolytharz (p) und des Imprägnierens des geschmolzenen Elektrolytharzes (p) in die poröse verstärkte Membran (6),
wobei das Verfahren **dadurch gekennzeichnet ist, dass**
die poröse verstärkte Membran (6) dem extrudierten geschmolzenen Elektrolytharz (p) durch zwei erwärmte Drehwalzen (4), die einander gegenüberliegend angeordnet sind, zugeführt wird.

2. Verfahren zum Herstellen einer verstärkten Elektrolytmembran nach Anspruch 1, ferner einen Vorgang des Anwendens einer Behandlung, bei der einem Elektrolytpolymer Ionenaustauscheigenschaften verliehen werden, auf die hergestellte verstärkte Elektrolytmembran (6) beinhaltend.

3. Verfahren zum Herstellen einer Membranelektrodenanordnung (30), die Elektrodenkatalysatorschichten (41) auf beiden Seiten einer verstärkten Elektrolytmembran aufweist, in der eine poröse verstärkte Membran (6) in ein Elektrolytharz (p) eingebettet ist, wobei das Verfahren folgende Schritte beinhaltet:
einen Vorgang des Extrudierens des erwärmten und geschmolzenen Elektrolytharzes (p) aus einem Harzabführkanal (3) eines Formwerkzeugs (2);
einen Vorgang des Zuführens der porösen verstärkten Membran (6) in das extrudierte geschmolzene Elektrolytharz (p);
wobei das Verfahren **dadurch gekennzeichnet ist, dass** es ferner beinhaltet:
einen Vorgang des Aufbringens von Elektrodenkatalysatorpartikeln (31) oder eines Gemisches aus Elektrodenkatalysatorpartikeln (31) und Elektrolytharzpartikeln (32) auf zwei erwärmte Drehwalzen (4), die einander gegenüberliegend angeordnet sind; und
einen Vorgang des Imprägnierens des geschmolzenen Elektrolytharzes (p) in die poröse verstärkte Membran (6) durch Einbetten der zugeführten porösen verstärkten Membran (6) in das geschmolzene Elektrolytharz (p) durch die erwärmten Drehwalzen (4), auf die das Gemisch aufgetragen worden ist, und des gleichzeitigen Ausbildens einer Elektrodenkatalysatorschicht (41) auf der Oberfläche der porösen verstärkten Membran (6).

4. Verfahren des Herstellens der Membranelektrodenanordnung nach Anspruch 3, ferner einen Vorgang des Anwendens einer Behandlung, bei der einem Elektrolytpolymer, aus dem die Elektrolytmembran (6) erzeugt wird, Ionenaustauscheigenschaften verliehen werden, auf die hergestellte Membranelektrodenanordnung (40) beinhaltend.

## Revendications

1. Procédé de fabrication d'une membrane électrolytique renforcée où une membrane renforcée poreuse (6) est incluse dans une résine électrolytique, le procédé comprenant au moins :
un processus d'extrusion de la résine électrolytique chauffée et fondue (p) depuis un orifice d'évacuation de résine (3) d'une filière (2) ;
un processus d'apport de la membrane renforcée poreuse (6) dans la résine électrolytique fondue extrudée (p) ; et
un processus d'inclusion de la membrane renforcée poreuse (6) dans la résine électrolytique fondue (p), et d'imprégnation de la résine électrolytique fondue (p) dans la membrane renforcée poreuse (6),
le procédé étant **caractérisé en ce que**
la membrane renforcée poreuse (6) est apportée dans la résine électrolytique fondue extrudée (p) par deux rouleaux rotatifs chauffés (4) disposés de manière opposée l'un à l'autre.

2. Procédé de fabrication d'une membrane électrolytique renforcée selon la revendication 1 comprenant en outre un processus d'application d'un traitement pour conférer des propriétés d'échange d'ions à un polymère électrolytique, à la membrane électrolytique renforcée (6) fabriquée.

3. Procédé de fabrication d'un ensemble d'électrode à membrane (30) incluant des couches de catalyseur d'électrode (41) sur les deux côtés d'une membrane électrolytique renforcée où une membrane renforcée poreuse (6) est incluse dans une résine électrolytique (p), le procédé comprenant :
un processus d'extrusion de la résine électrolytique chauffée et fondue (p) depuis un orifice d'évacuation de résine (3) d'une filière (2) ;
un processus d'apport de la membrane renforcée poreuse (6) dans la résine électrolytique fondue extrudée (p) ;
le procédé étant **caractérisé en ce qu'**il comprend en outre :
un processus d'application de particules de catalyseur d'électrode (31) ou d'un mélange de particules de catalyseur d'électrode (31) et de particules de résine électrolytique (32) à deux rouleaux rotatifs chauffés (4) disposés de manière opposée l'un à l'autre ; et
un processus d'imprégnation de la résine électrolytique fondue (p) dans la membrane renforcée poreuse (6) par inclusion de la membrane renforcée poreuse (6) apportée dans la résine électrolytique fondue (p) par les rouleaux rotatifs chauffés (4) auxquels le mélange est appliqué, et en même temps formation d'une couche de catalyseur d'électrode (41) sur la surface de la membrane renforcée poreuse (6).

4. Procédé de fabrication de l'ensemble d'électrode à membrane selon la revendication 3 comprenant en outre un processus d'application d'un traitement pour conférer des propriétés d'échange d'ions à un polymère électrolytique formant la membrane électrolytique (6), à l'ensemble d'électrode à membrane (40) fabriqué.
